# EUROPÄISCHE PATENTSCHRIFT

(11) **EP 0 937 876 B1**
(45) Veröffentlichungstag und Bekanntmachung des Hinweises auf die Patenterteilung: **12.07.2000**
(21) Anmeldenummer: 98100277.7
(22) Anmeldetag: 09.01.1998
(51) Int. Cl.: F02D 41/02, F01N 3/08

(54) **Verfahren zur Regeneration einer Stickoxidfalle im Abgassystem eines Verbrennungsmotors**
Method to regenerate a nitrogen oxide trap in the exhaust system of a combustion engine
Procédé pour la régénération d'une piège à oxyde d'azote dans le système d'échappement d'un moteur à combustion

(43) Veröffentlichungstag der Anmeldung: 25.08.1999
(60) Teilanmeldung: 99109532.4
(73) Patentinhaber: Ford Global Technologies, Inc., Dearborn, Michigan 48126 (US)
(72) Erfinder: Dickers, Guido, 41068 Moenchengladbach (DE); Grieser, Klemens, 40764 Langenfeld (DE); Phlips, Patrick, 50858 Köln (DE); Himmelsbach, Johann, 51789 Lindlar (DE)
(74) Vertreter: Messulam, Alec Moses

(56) Entgegenhaltungen:
- EP-A- 0 627 548
- EP-A- 0 713 959
- DE-A- 19 511 548

## Beschreibung

Die Erfindung betrifft ein Verfahren zur Regeneration einer Stickoxidfalle im Abgassystem eines Verbrennungsmotors mit Einrichtungen zur Beeinflussung des zugeführten Luftmassenstroms und der eingespritzten Kraftstoffmenge, bei dem zum Zwecke der Einleitung bzw. Beendigung eines bei einem fetten Luft/Kraftstoffverhältnis durchgeführten Regenerationszyklus die eingespritzte Kraftstoffmenge verändert wird.

Der Einsatz einer derartigen Stickoxidfalle (NOx-Trap) im Verbund mit einem konventionellen Drei-Wege-Katalysator erfolgt bevorzugt bei Kraftfahrzeugen, deren Verbrennungsmotor für einen Magerbetrieb ausgelegt ist (sog. lean burn engine). Die Stickoxidfalle verringert insbesondere im Magerbetrieb auftretende Stickoxidemissionen, indem Stickoxidmoleküle an der Beschichtung der Falle angelagert und somit aus dem Abgas entfernt werden. Die angelagerten Stickoxide werden unter Einwirkung eines Katalysators zu Stickstoff und Sauerstoff aufgespalten, wobei der Sauerstoff mit überschüssigem Wasserstoff oder CO zu Wasser bzw. CO₂ verbrannt wird. Diese Aufspaltungsreaktionen können jedoch bei den im Mager- oder stöchiometrischem Betrieb des Motors herrschenden Abgasbedingungen nicht bzw. nur in sehr geringem Umfange erfolgen. Stattdessen lagern sich die Stickoxide an der Falle an, bis ein Sättigungsgrad erreicht ist, so daß die Reinigungseffizienz der Stickoxidfalle stark abnimmt.

Deshalb ist es bekannt, die Stickoxidfalle in regelmäßigen Abständen einem Regenerationszyklus zu unterziehen, indem nach Ablauf einer vorgegebenen Zeit mit Betrieb bei mageren oder stöchiometrischen Luft-/Kraftstoffverhältnissen die Aufspaltung der gespeicherten Stickoxide durch kurzzeitige starke Überfettung des Luft-/Kraftstoffgemisches erreicht wird. Beispielsweise kann hierzu vorgesehen sein, den Motor statt mit lambda = 1,6 (Magerbetrieb) alle 60 s für eine Dauer von 0,5 bis 1 s mit lambda = 0,75 (stark überfettet) zu betreiben, wobei lambda das auf das stöchiometrische Verhältnis normierte Luft-/Kraftstoffverhältnis bedeutet.

Diese zur Regeneration erforderliche zyklische Überfettung führt zu einem erhöhten Treibstoffbedarf. Es ist erstrebenswert, den zusätzlichen Kraftstoffverbrauch durch diese Regenerationszyklen zu minimieren und damit die Gesamteffizienz des Stickoxidfallensystems zu verbessern.

Aus DE-A-19511548 ist eine Brennkraftmaschine mit einem Drei-Wege-Katalysator bekannt, in den ein NOx-Absorber integriert ist. Zur Stickoxidreduzierung wird die Brennkraftmaschine abwechselnd im Magerbetrieb und im stöchiometrischen Betrieb oder Anreicherungsbetrieb gefahren. Letzterer dient zur Regenerierung des NOx-Absorbers nach einem Magerbetrieb. Es ist außerdem vorgesehen, daß jeweils vor einer Magerbetriebsphase auf eine stöchiometrische oder Anreicherungsbetriebsphase umgeschaltet wird, sobald der gemessene Stickoxidgehalt über ein vorgegebenes Maß ansteigt. Die ggf. zusätzlich zum normalen Fahrbetrieb notwendigen Anreicherungsphasen bzw. Regenerationszyklen erhöhen den Kraftstoffverbrauch.

Die Aufgabe der vorliegenden Erfindung besteht darin, ein Verfahren der eingangs genannten Art so zu verbessern, daß der durch die Regenerationszyklen entstehende Kraftstoffmehrverbrauch minimiert wird.

Zur Minimierung des Kraftstoffverbrauches läge es näher, aus einer Situation, in der ein relativ hohes Drehmoment gefordert wird (stöchiometrischer Betrieb) bei Anforderung eines geringeren Drehmomentes unmittelbar auf Magerbetrieb umzuschalten. Im Gegensatz hierzu beabsichtigt die Erfindung, unmittelbar vor einer Reduzierung der eingespritzten Kraftstoffmenge - womit der Magerbetrieb einsetzt - zur Minimierung der Stickoxidemission eine Regeneration der Stickoxidfalle durchzuführen.

Die Dauer eines Regenerationszyklus der Stickoxidfalle ist u.a. von der im vorgeschalteten Drei-Wege-Katalysator gespeicherten Sauerstoffmenge abhängig. Im Drei-Wege-Katalysator reagiert ein Teil des fetten Abgases während des Regenerationsvorgangs mit dem im Drei-Wege-Katalysator gespeicherten Sauerstoff und geht damit der eigentlichen Regeneration der Stickoxidfalle verloren. Im Gegensatz zum Magerbetrieb mit hohem Sauerstoffüberschuß im Abgas ist die Sauerstoff-Speicherkapazität des Drei-Wege-Katalysators bei geringer Sauerstoffkonzentration im Abgas nicht gesättigt. Daher wird erfindungsgemäß die Dauer des Regenerationszyklus in Abhängigkeit von der im vorgeschalteten Drei-Wege-Katalysator gespeicherten Sauerstoffmenge verkürzt. Hierdurch wird die Dauer des Regenerationszyklus auf die abnehmende Sauerstoffspeicherkapazität des vorgeschalteten Drei-Wege-Katalysators abgestimmt und damit der zusätzliche Kraftstoffeinsatz minimiert.

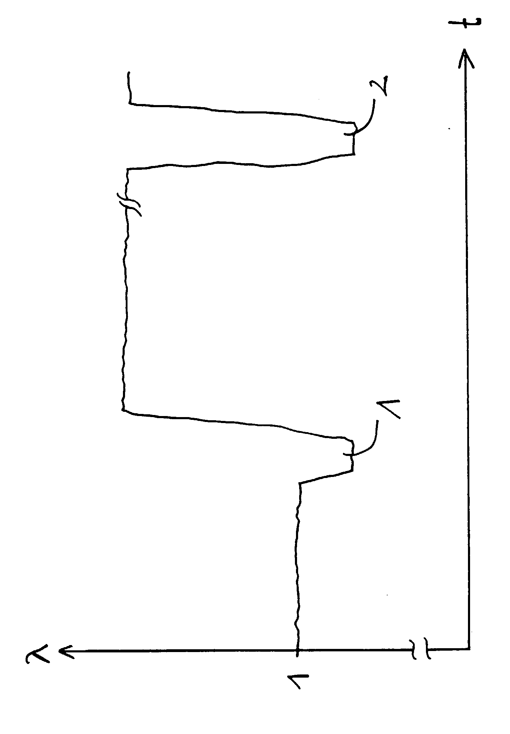

Die beigefügte Abbildung zeigt schematisch den Ablauf eines erfindungsgemäßen Regenerationsverfahrens.

Eine (nicht dargestellte) Vorrichtung zur Durchführung des Verfahrens weist einen Verbrennungsmotor mit einem Drei-Wege-Katalysator und einer Stickoxidfalle im Abgassystem auf. Der Verbrennungsmotor erhält Kraftstoff von einer Kraftstoffeinspritzanlage sowie Luft über eine elektronisch steuerbare Drosselklappe. Eine elektronische Motorsteuerung steuert die Einspritzanlage, die Drosselklappe, die Zündanlage usw. und erhält eine Vielzahl von Eingangssignalen, wie z.B. die Motordrehzahl, die Gaspedalstellung, die Abgastemperatur usw.. Aus diesen Eingangssignalen werden in bekannter Weise charakteristische Motorkenngrößen, z.B. das gewünschte Drehmoment, das Luft/Kraftstoffverhältnis oder dgl. bestimmt.

Der Verbrennungsmotor arbeitet in dem in der Figur dargestellten Beispiel in einem stöchiometrischen Betrieb mit einem Luft/Kraftstoffverhältnis von lambda = 1. Zur Regeneration der Stickoxidfalle sind Regenerationszyklen 1,2 vorgesehen, in denen ein fettes Luft/Kraftstoffverhältnis von lambda = 0,75 eingestellt wird. Die Zeiten, für die Regenerationen erforderlich sind, werden dadurch bestimmt, daß die Motorsteuerung abhängig von der aktuellen Drehzahl und dem Drehmoment des Verbrennungsmotors, dem Luft/Kraftstoffverhältnis, sowie der Abgastemperatur und dem Abgasmassenstrom im Bereich der Stickoxidfalle mittels eines funktionalen Zusammenhangs die aktuelle Stickoxidaufnahmerate der Stickoxidfalle näherungsweise bestimmt. Diese wird zeitlich aufintegriert. Desgleichen wird der im Katalysator gespeicherte Sauerstoff berechnet. Bei einem verminderten Drehmomentbedarf wird vor Umschaltung auf Magerbetrieb der Regenerationszyklus 1 für die sich aus Stickoxidaufnahme und Sauerstoffaufnahme optimale Zeitdauer eingestellt. Danach werden diese Werte auf Null zurückgesetzt. Die Integration fängt dann neu an. Hat darauf das Integral einen vorgegebenen Schwellwert überschritten, so signalisiert dies, daß die Aufnahmekapazität der Falle erschöpft ist, weshalb dann der Regenerationszyklus 2 gestartet wird. Nach dem Regenerationszyklus 2 wird das Integral auf den Wert Null gesetzt. Befindet sich der Motor für eine vorgegebene Zeit im Vollastbetrieb, wird das Integral ebenfalls auf Null gesetzt.

Der Regenerationszyklus 1 ist gegenüber der Dauer des Regenerationszyklus 2 um eine bestimmten Anteil verkürzt, welcher der geringeren Sauerstoffspeicherung des Drei-Wege-Katalysators nach stöchiometrischem Betrieb gegenüber Magerbetrieb entspricht.

## Patentansprüche

1. Verfahren zur Regeneration einer Stickoxidfalle, welche im Abgassystem eines Verbrennungsmotors nach einem Drei-Wege-Katalysator angeordnet ist, mit Einrichtungen zur Beeinflussung der eingespritzten Kraftstoffmenge, bei dem zum Zwecke der Einleitung bzw. Beendigung eines Regenerartionszyklus die eingespritzte Kraftstoffmenge verändert wird, wobei wenigstens in einem Regenerationszyklus unmittelbar vor einer für den Magerbetrieb vorgesehenen Reduzierung der eingespritzten Kraftstoffmenge die Stickoxidfalle regeneriert wird,
**dadurch gekennzeichnet,** daß
die Dauer des Regenerationszyklus in Abhängigkeit von der Sauerstoffspeicherung des Drei-Wege-Katalysators verändert wird.

2. Verfahren nach Anspruch 1,
**dadurch gekennzeichnet,** daß
ausgehend von stöchiometrischem Betrieb vor einer Umschaltung in Magerbetrieb ein Regenerationszyklus der Stickoxidfalle durchgeführt wird.

## Claims

1. Process for regenerating a nitrogen oxide trap which is arranged in the exhaust gas system of an internal combustion engine downstream from a three-way catalytic converter, with means for influencing the injected quantity of fuel, in which process the injected quantity of fuel is modified for the purpose of initiating or terminating a regeneration cycle, wherein the nitrogen oxide trap is regenerated at least in a regeneration cycle immediately before a reduction in the injected quantity of fuel provided for lean burn operation,
characterised in that
the duration of the regeneration cycle is modified as a function of the oxygen storage of the three-way catalytic converter.

2. Process according to claim 1,
characterised in that,
starting from stoichiometric operation, a regeneration cycle of the nitrogen oxide trap is performed before switching over to lean burn operation.

## Revendications

1. Procédé pour la régénération d'un piège à oxyde d'azote qui est disposé dans le système d'échappement d'un moteur à combustion après un catalyseur à trois voies, lequel est équipé de dispositifs permettant d'influencer la quantité de carburant injectée, dans lequel, à des fins d'initiation ou d'achèvement d'un cycle de régénération, la quantité de carburant injectée est modifiée, à l'occasion de quoi le piège à oxyde d'azote est régénéré au moins dans un cycle de régénération immédiatement avant une réduction de la quantité de carburant injectée prévue pour le fonctionnement avec mélange pauvre,
caractérisé en ce que la durée du cycle de régénération est modifiée en fonction du stockage d'oxygène du catalyseur à trois voies.

2. Procédé selon la revendication 1, caractérisé en ce que, en partant d'un fonctionnement avec mélange stoechiométrique, un cycle de régénération du piège à oxyde d'azote est réalisé avant de passer en fonctionnement avec mélange pauvre.
